# EUROPEAN PATENT APPLICATION

(11) **EP 2 851 844 A2**
(43) Date of publication of application: **25.03.2015**
(21) Application number: 14185051.1
(22) Date of filing: 17.09.2014
(51) Int. Cl.: G06K 9/03

(54) **Information recognition processing device and diagnosis method**

(30) Priority: 18.09.2013 JP 2013193552
(71) Applicant: Kabushiki Kaisha Toshiba, Minato-ku Tokyo 105-8001 (JP)
(72) Inventor: Hamamura, Tomoyuki, Tokyo, Tokyo 105-8001 (JP); Maeda, Masaya, Tokyo, Tokyo 105-8001 (JP); Irie, Bunpei, Tokyo, Tokyo 105-8001 (JP); Piao, Ying, Tokyo, Tokyo 105-8001 (JP); Watanabe, Yuka, Tokyo, Tokyo 105-8001 (JP)
(74) Representative: Horn Kleimann Waitzhofer

(57) **Abstract**

An information recognition processing device according to an embodiment includes a recognition unit, a diagnosis unit, and an output unit. The recognition unit recognizes a plurality of pieces of identification information recorded by a printing device. The diagnosis unit diagnoses the printing device based on recognition statistics information indicating recognition results of the plurality of pieces of identification information. The output unit outputs the diagnosis result.

## Description

### FIELD

Embodiments of the present invention relate to an information recognition processing device and a diagnosis method.

### BACKGROUND

In the field of labor saving of mail services, printing identification information such as barcodes on mails using printing devices and reading the identification information from image information of the mails using information recognition processing devices have been generally performed. However, barcodes difficult to recognize are printed due to failure, lack of adjustments, or the like of the printing devices in some cases. Since these barcodes are not recognized through normal recognition processes, these barcodes may be causes to deteriorate labor-saving effects.

As a method of preventing a recognition ratio from being reduced due to breakdown, lack of adjustment, or the like of a printing device, there has been known a method of recognizing tendency of a printing failure based on statistics information and selecting a recognition process proper for this tendency.

Further, as a method of diagnosing breakdown of a device based on image information, there has been known a method of diagnosing breakdown of a scanner through white omission detection.

In the former case, when the degree of adjustment failure of a printing device progresses, identification information is not recognized in some cases in spite of selecting a proper recognition process. In the latter case, the method of diagnosing breakdown of a scanner has been merely described.

### BRIEF DESCRIPTION OF THE DRAWINGS

Fig. 1 is a diagram illustrating the overall configuration of an information recognition processing device according to an embodiment.
Fig. 2 is a flowchart illustrating an example of a barcode recognition process performed by a barcode processing device according to the embodiment.
Fig. 3 is a diagram illustrating an example of a fluorescent barcode recognized by the barcode processing device according to the embodiment.
Fig. 4 is a diagram illustrating an example of recognition result data stored in a recognition result storage unit of the barcode processing device according to the embodiment.
Fig. 5 is a diagram illustrating an example of recognition result data stored in the recognition result storage unit of the barcode processing device according to the embodiment.
Fig. 6 is a diagram illustrating an example of an error correction process of barcode recognition by the barcode processing device according to the embodiment.
Fig. 7 is a diagram illustrating an example of the error correction process of barcode recognition by the barcode processing device according to the embodiment.
Fig. 8 is a diagram illustrating an example of detection of an slant angle of a barcode by the barcode processing device according to the embodiment.

### DETAILED DESCRIPTION

An information recognition processing device according to an embodiment includes a recognition unit, a diagnosis unit, and an output unit. The recognition unit recognizes a plurality of pieces of identification information recorded by a printing device. The diagnosis unit diagnoses the printing device based on recognition statistics information indicating recognition results of the plurality of pieces of identification information. The output unit outputs the diagnosis result.

Hereinafter, an embodiment will be described with reference to the drawings.

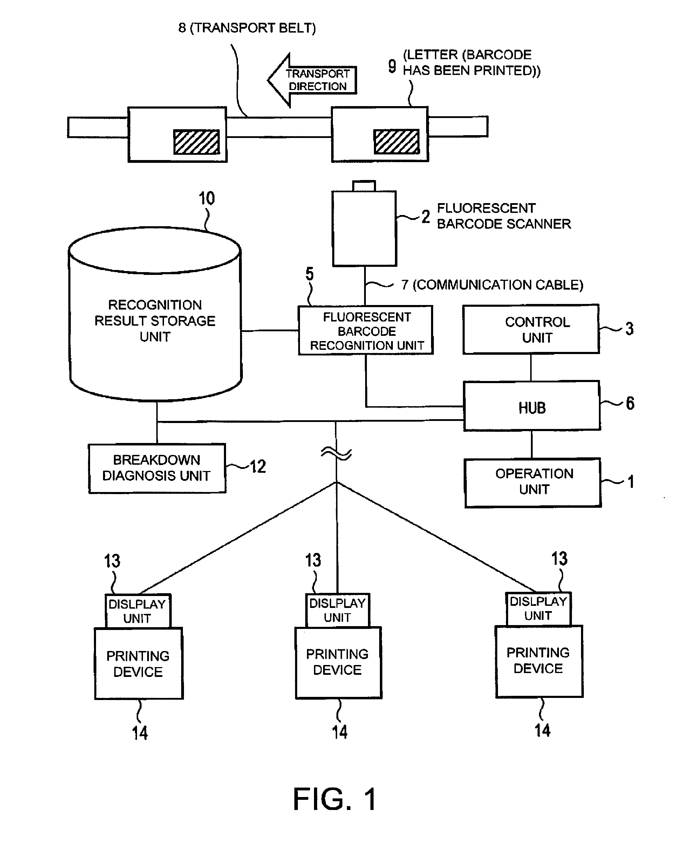

Fig. 1 is a diagram illustrating the overall configuration of the information recognition processing device according to the embodiment. The information recognition processing device according to the embodiment is a barcode processing device. The barcode processing device can be applied to, for example, a mail sorting machine.

As illustrated in Fig. 1, the barcode processing device includes an operation unit 1, a fluorescent barcode scanner 2, a control unit 3, a fluorescent barcode recognition unit 5, a hub 6, a communication cable 7, a transport belt 8, a recognition result storage unit 10, a breakdown diagnosis unit 12, display units 13, and printing devices 14. The display unit 13 is an output device (output unit).

For example, the operation unit 1, the fluorescent barcode scanner 2, the control unit 3, the fluorescent barcode recognition unit 5, the hub 6, the communication cable 7, the transport belt 8, the recognition result storage unit 10, and the breakdown diagnosis unit 12 form a barcode processing device body.

Reading targets 9 are letters such as mails and fluorescent barcodes (that is, identification information) are printed on the reading targets 9.

The transport belt 8 transports the reading targets 9.

The fluorescent barcode scanner 2, which may also be referred to as "image reading unit", scans the reading targets 9 transported by the transport belt 8 using invisible light to acquire images (that is, fluorescent images) of the reading targets 9. That is, the fluorescent barcode scanner 2 acquires the images including the fluorescent barcodes as barcode recognition images. The fluorescent barcode scanner 2 sequentially acquires a plurality of images from the plurality of reading targets 9 sequentially transported by the transport belt 8.

The fluorescent barcode recognition unit 5 is an image processing unit that processes the images acquired by the fluorescent barcode scanner 2. The fluorescent barcode recognition unit 5 detects the fluorescent barcodes from the images, recognizes (decodes) the detected barcodes, and outputs the identification result.

That is, the fluorescent barcode recognition unit 5 performs differential binary labeling of labeling a collection with a value equal to or greater than a given adjacent density difference, extracts barcode regions, and determines individual bars. The fluorescent barcode recognition unit 5 decodes arrangement of bars using the determined bars as inputs, outputs the recognition result to a sorting machine (not illustrated) sorting the reading targets 9, and outputs the recognition result to the recognition result recording unit 10 recording log information or the like. That is, the recognition result of the barcode recognition process is recorded as recognition statistics information in the recognition result recording unit 10. Normal binary labeling may be applied instead of the differential binary labeling.

The operation unit 1 can include, for example, a PC (personal computer). Likewise, the control unit 3 can include, for example, a PC. Likewise, the fluorescent barcode recognition unit 5 can include, for example, a PC. The PC includes a CPU, a ROM, a RAM, and a program stored in the ROM. When the CPU executes the program, the PC can execute functions of the operation unit 1, the control unit 3, and the fluorescent barcode recognition unit 5.

The communication cable 7 connects the fluorescent barcode scanner 2 to the fluorescent barcode recognition unit 5. The communication cable 7 connects the fluorescent barcode recognition unit 5 to the recognition result storage unit 10. The communication cable 7 connects the hub 6 to the operation unit 1, the control unit 3, the fluorescent barcode recognition unit 5, the recognition result storage unit 10, the breakdown diagnosis unit 12, and the display units 13.

The recognition result storage unit 10 stores a result (that is, a recognition result) of the barcode recognition process as recognition statistics information in order to perform statistics analysis.

The breakdown diagnosis unit 12 diagnoses breakdown or the like of the printing device 14 based on the recognition result stored in the recognition result storage unit 10, that is, the recognition statistics information.

For example, each display unit 13 is installed to correspond to each printing device 14 and is connected via the hub 6 and a network. Each display unit 13 displays a breakdown diagnosis result of each printing device 14. The remaining configuration of the display unit 13 will be described below.

The printing device 14 prints a barcode indicating identification information using fluorescent ink on the reading target 9. The printed barcode is a fluorescent barcode.

When operation information is not used, the operation unit 1 is not an essential constituent. The operation information is, for example, information specifying a post office from which a lot of the reading targets 9 to be subsequently processed comes.

Hereinafter, a specific order of a diagnosis method according to an embodiment will be described. The fluorescent barcode scanner 2 is assumed to be calibrated in advance. That is, position adjustment or the like of the fluorescent barcode scanner 2 is assumed to be completed.

In the embodiment, an image acquisition and recognition target is a fluorescent barcode. The barcode may be a normal printed barcode. The barcode may be a 1-dimensional barcode or a 2-dimensional barcode.

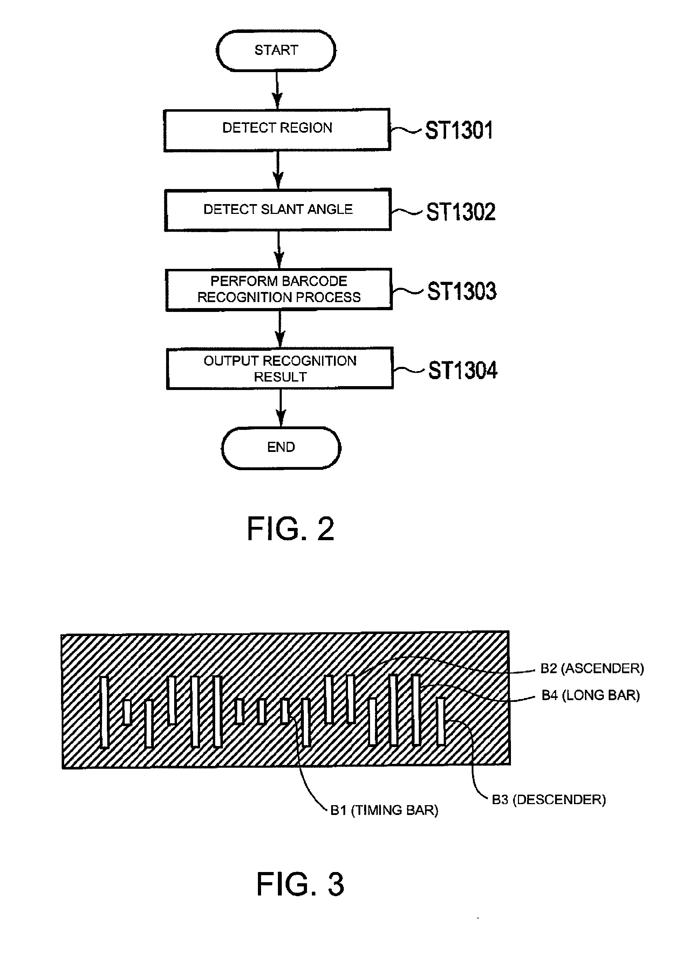

As illustrated in Fig. 3, a fluorescent barcode to be recognized is, for example, a 4-state barcode. The 4-state barcode has 4 kinds of bars, that is, a timing bar B1, an ascender B2, a descender B3, and a long bar B4. The timing bar B1 is shorter than the other bars, the ascender B2 is longer than the timing bar B1 in an upper direction, the descender B3 is longer than the timing bar B1 in the lower direction, and the long bar B4 is longer than the timing bar B1 in the upper and lower directions. The fluorescent barcode to be recognized has an error correction function by reed-solomon type decoding.

An example of a normal barcode recognition process performed by the fluorescent barcode recognition unit 5 will be described with reference to Fig. 2.

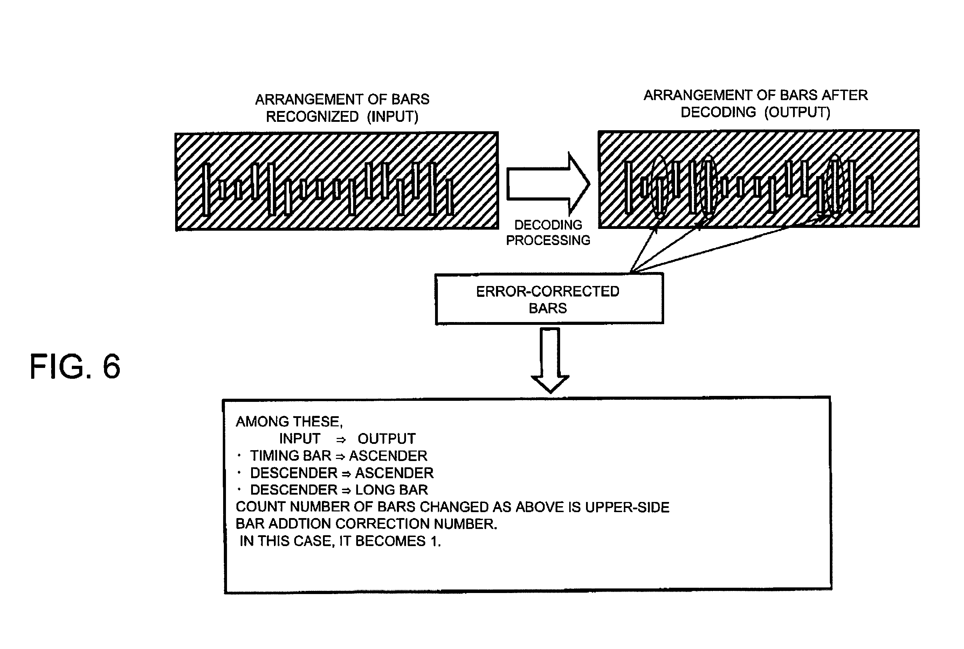

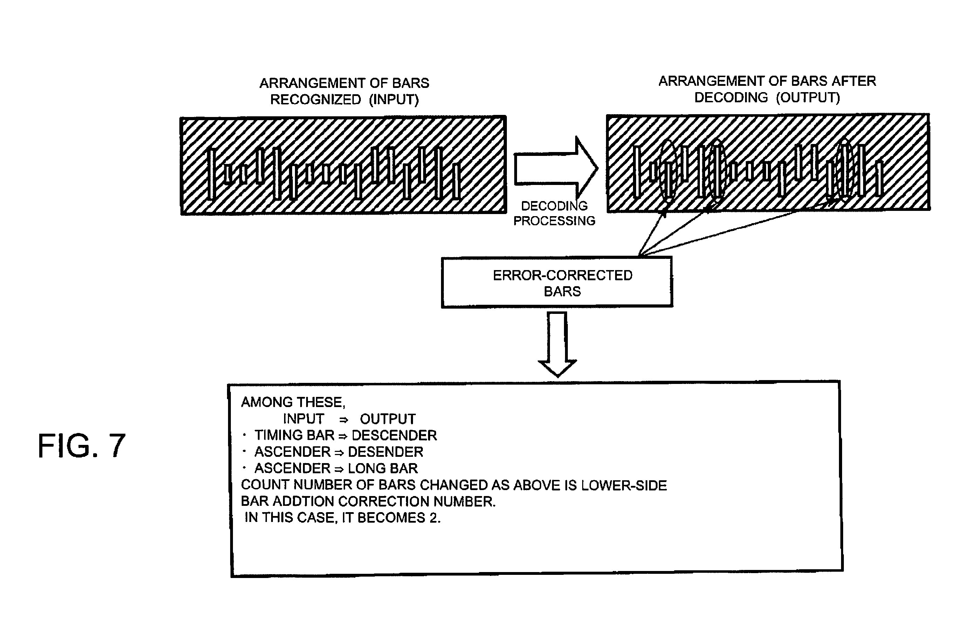

First, a barcode region is extracted from a barcode recognition image (ST1301). That is, a portion in which bar-shaped regions regularly labeled with the same value at a constant pitch are lined is extracted as the barcode region. Subsequently, a skew angle or a slant angle of the barcode is detected from the arrangement of the bar-shaped labeled regions in the barcode region (ST1302). Subsequently, a barcode recognition process (ST1303) is performed. In the barcode recognition process, individual bars are determined. That is, the bars are classified into 4 kinds of bars according to the lengths or positions of the bar-shaped labeled regions and the arrangement of the bars are detected. Further, the arrangement of the bars is used as input information and the input information is decoded, thereby decoded bars are generated and identification information is acquired based on arrangement of the decoded bars. That is, address information is acquired. A process of decoding the input information includes an error correction process to be described below with reference to Figs. 6 and 7. Arrangemen of the decoded bars is detected from the arrangement of the bars by the error corredtion. In addtion, the breakdown diagnosis unit 12 may compare the arrangement of the bars with the arrangement of the decoded bars, and may diagnose breakdown or the like of the printing device 14 based on differential information obtained from the comparison result. A plurality of images are acquired from the same reading target 9, and then when a plurality of decoding results can be obtained, a proper decoding result is adopted.

In general, the proper decoding result is selected using the number of non-detections and the number of error corrections as references in many cases. When the proper decoding result is obtained, the recognition result of the barcode recognition process is output to the side of the sorting machine. Further, the recognition result of the barcode recognition process is output to the recognition result recording unit 10 (ST1304). The recognition result of the barcode recognition process is recorded as recognition statistics information in the recognition result recording unit 10.

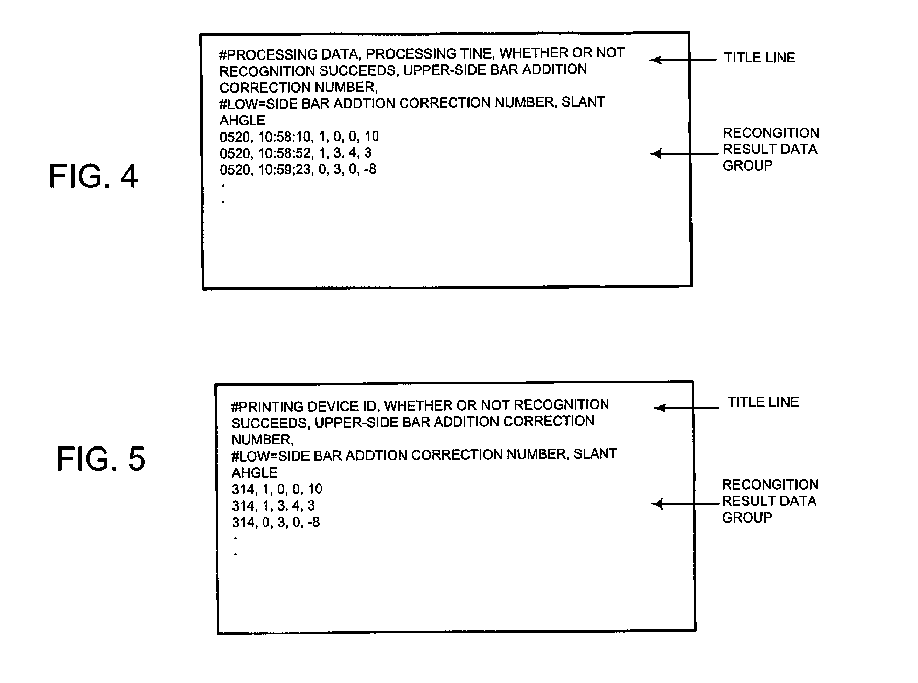

Fig. 4 is a diagram illustrating an example of data (that is, the recognition statistics information) of the recognition result recorded in the recognition result storage unit 10. A recognition result of each reading target is contained in one line. One line includes "processing date," " processing time," "whether or not recognition succeeds," "upper-side bar addition correction number," "low-side bar addition correction number," and "slant angle."

Fig. 5 is a diagram illustrating another example of data (that is, the recognition statistics information) of the recognition result recorded in the recognition result storage unit 10. A recognition result of each reading target is contained in one line. One line includes "printing device ID," "whether or not recognition succeeds," "upper-side bar addition correction number," "low-side bar addition correction number," and "slant angle."

Next, each piece of data of the recognition statistics information recorded in the recognition result storage unit 10 will be described.

A date and a time in which a recognition process is performed are recorded in the fields "processing date" and "processing time," respectively.

Whether or not the fluorescent barcode recognition unit 5 succeeds to recognize a barcode printed on a recognition target is recorded in the field "whether or not recognition succeeds." When the recognition succeeds, 1 is recorded. When the recognition fails, 0 is recorded.

As illustrated in Fig. 6, the number of bars added as the upper-side bars by error correction is recorded in the field "upper-side bar addition correction number." In other words, "upper-side bar addition correction number" indicates the number of bars subjected to a correction process of adding a bar to an end of a bar. As illustrated in Fig. 7, the number of bars added as the lower-side bars by error correction is recorded in the field "lower-side bar addition correction number." In other words, "lower-side bar addition correction number" indicates the number of bars subjected to a correction process of adding a bar to the other end of a bar.

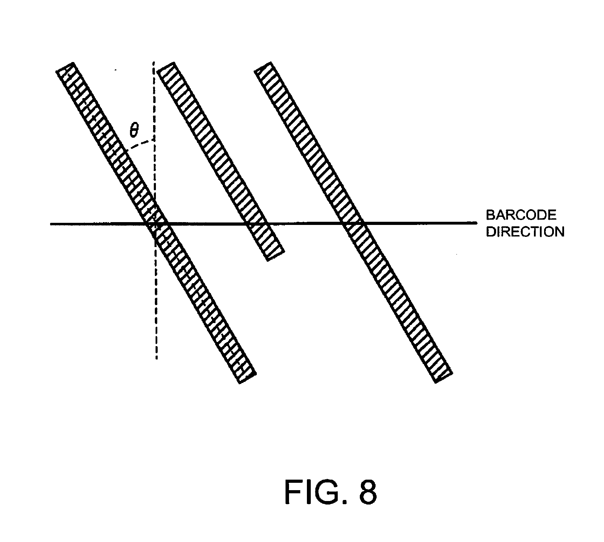

As illustrated in Fig. 8, an angle θ indicating an inclination of a bar with respect to a direction vertical to a barcode direction is recorded in the field "slant angle." In Fig. 8, θ is the slant angle. The slant angle is calculated in ST1302 of Fig. 2.

Information indicating a processing post office and a printing device (the printing device 14) by which the barcode is printed is recorded in the field "printing device ID." That is, "printing device ID" is unique information unique to the printing device 14. As a method of acquiring this information, for example, there is a method of acquiring the information by inputting, from the operation unit 1, an attribute indicating a post office from which the lot of the reading target 9 to be subsequently processed comes or a method of acquiring mail attribute information indicating a post office and a printing device by which the barcode is printed by first reading an ID tag code. When "printing device ID" is recorded on a barcode, "printing device ID" can also be acquired from a barcode recognition result.

Next, a process in the breakdown diagnosis unit 12 will be described. The breakdown diagnosis unit 12 analyzes data (that is, the recognition statistics information) of the recognition result recorded in the recognition result storage unit 10 and diagnose breakdown of the printing device 14.

First, a method of diagnosing breakdown of the printing device 14 based on "whether or not recognition succeeds" included in the recognition statistics information. Qualitatively, when the printing device 14 is broken down and printing fails, a recognition success ratio will considerably decrease. The breakdown diagnosis unit 12 grasps a change tendency of the recognition result to detect breakdown of the printing device 14. For example, the breakdown diagnosis unit 12 claculates a recognition ratio for each predetermined period. The breakdown diagnosis unit 12 diagnoses the printing device 14 as being broken down when the recognition ratio decreases. That is, the breakdown diagnosis unit 12 diagnoses the printing device 14 as being broken down when the recognition ratio is less than a threshold value. For example, a first threshold value and a second threshold value less than the first threshold value are set. When the recognition ratio is less than the first threshold value and is equal to or greater than the second threshold value, the breakdown diagnosis unit 12 diagnoses a breakdown level of the printing device 14 as breakdown level 1. when the recognition ratio is less than the second threshold value, the breakdown diagnosis unit 12 diagnoses the breakdown level of the printing device 14 as breakdown level 2. The breakdown diagnosis unit 12 may cause the display unit 13 to output (display) a guidance according to the diagnosis result.

Next, a method of diagnosing breakdown based on "upper-side bar addition correction number" included in the recognition statistics information will be described. When breakdown or adjustment failure of the printing device 14 occurs, only the upper-side bars are shorter than at the normal time in some cases. When bars are blurred due to the property of letters of a land pattern or the like, bar addition correction is not biased to any of the upper side and the lower side. Therefore, when the addition correction is biased to the upper-side bars, the printing device 14 is considered to fail. Diagnosis using "lower-side bar addition correction number" included in the recognition statistics information is the same as diagnosis using "upper-side bar addition correction number." When the addition correction is biased to the lower-side bars, the printing device 14 is considered to fail. The breakdown diagnosis unit 12 calculates an average of "upper-side bar addition correction number" and an average of "lower-side bar addition correction number" by retracing the present time by a given period of time. When a difference between both of the averages exceeds a threshold value, the printing device 14 is diagnosed as breakdown.

Next, a method of diagnosing breakdown based on "slant angle" included in the recognition statistics information will be described. In a normal state, a barcode direction in the barcode printing is adjusted according to a transport speed of letters so that the slant angle of the bars is 0 degrees. When the bars are slanted, a recognition ratio is generally lowered. Therefore, it is desirable to adjust the barcode direction in the printing so that the slant angle is 0 degrees. However, when the barcode direction in the printing is deflected from a direction at the time of adjustment and the transport speed is changed from the speed at the time of adjustment, the bars are slanted. When the fact that the bars are slanted typically in a constant direction is known, it is desirable to approximate the slant angle to 0 degrees by adjusting the printing device 14. When the slant angles are averaged by retracing the present time by a given period of time and the average value is deviated from 0 degrees, the breakdown diagnosis unit 12 diagnoses that adjustment deflection of the barcode direction in the printing occurrs in the printing device.

When a plurality of printing devices 14 i connected to the barcode processing device body, the diagnosis may be performed for each printing device based on the recognition statistics information of each printing device. That is, the breakdown diagnosis unit 12 can determine which printing device 14 is broken down by using "printing device ID" and performing the above-described diagnosis based on the recognition statistics information of each "printing device ID."

When "printing device ID" may not be acquired, a method of using "processing time" can be considered. Data is divided based on the same period of time of different days and the above-described diagnosis is performed on the printing device 14 based on the data. This is because post offices and periods of time are matched in many cases regardless of dates in a mail processing of a mail service provider as mails that arrived from post office A are processed between 18:00 and 19:00 and mails that arrived from post office B are processed between 19:00 and 20:00. When each post office has one printing device 14, breakdown of the printing device 14 of each post office can be diagnosed.

Finally, the configuration of the display unit 13 will be described. The display unit 13 may not be mounted on the printing device 14 and may be located at the same place as that of the fluorescent barcode scanner 2 and the others (that is, the same place as that of the barcode processing device body). A plurality of fluorescent barcode scanners 2 and the others present respective local regions may be managed collectively at a maintenance center via a network and the display units 13 may be installed at the maintenance center. In this case, when data of the respective local regions are collected and breakdown diagnosis is performed, the diagnosis can be performed based on a larger amount of data, and therefore accuracy is expected to be improved. The display unit 13 may be installed in each local region to correspond to the printing device 14 present in each local region and may be connected to the fluorescent barcode scanner 2 and the others via a network.

According to theforegoing embodiment, an information recognition processing device and a diagnosing method excellent in diagnosis of a printing device are provided. According to the foregoing embodiment, breakdown, lack of adjustment, or the like of the printing device can be diagnosed and maintenance person can be notified of the breakdown, the lack of adjustment, or the like so that maintenance is urged.

Several embodiments of the present invention have been described, but the embodiments have been suggested as examples and are not intended to limit the scope of the present invention. The embodiments can be realized in other various ways and various omission, substitutions, and modifications can be made within the scope of the invention without departing from the gist of the invention. The embodiments or the modifications are included in the scope or the gist of the invention, and the embodiments or the modifications are similarly included in the scope of the invention described in the claims and equivalents thereof.

## Claims

1. An information recognition processing device comprising:
a recognition unit (5) configured to recognize a plurality of pieces of identification information recorded by a printing device (14);
a diagnosis unit (12) configured to diagnose the printing device (14) based on recognition statistics information; and
an output unit (13) configured to output a diagnosis result.

2. The information recognition processing device according to claim 1, further comprising:
an image reading unit (2) configured to acquire an image from a reading target,
wherein the recognition unit (5) is configured to detect the identification information from the image and to recognize the identification information.

3. The information recognition processing device according to claim 1 or 2, further comprising:
a storage unit (10) configured to store the recognition statistics information.

4. The information recognition processing device according to any of claims 1 to 3,
wherein the recognition unit (5) is configured to recognize unique information regarding printing devices (14) and to output a unique information recognition result,
wherein the diagnosis unit (12) is configured to diagnose each printing device based on the unique information recognition result and the recognition statistics information, and
wherein the output unit (13) is configured to output a diagnosis result of each printing device (14).

5. The information recognition processing device according to any of claims 1 to 4,
wherein the recognition unit (5) is configured to output the recognition result including a recognition processing time and date at which a recognition process is performed to recognize the identification information, and
wherein the diagnosis unit (12) is configured to diagnose the printing device based on the recognition statistics information indicating the recognition result including the recognition processing time and date.

6. The information recognition processing device according to claim 5, wherein the diagnosis unit (12) is configured to detect a tendency of a change in the recognition result based on the recognition statistics information indicating the recognition result including the recognition processing time and date and to diagnose the printing device based on the tendency of the change in the recognition result.

7. The information recognition processing device according to claim 5 or 6, wherein the diagnosis unit (12) is configured to generate a diagnosis result of the printing device according to a time based on the recognition statistics information indicating the recognition result including the recognition processing time and date.

8. The information recognition processing device according to any of claims 4 to 7, further comprising:
a plurality of output units (13) corresponding to a plurality of printing devices (14),
wherein each of the output units (13) is configured to display a diagnosis result of the corresponding printing device (14).

9. The information recognition processing device according to any of claims 4 to 8, further comprising:
a plurality of image reading units (2) configured to acquire an image from a reading target; and
a plurality of output units (13) corresponding to a plurality of printing devices (14),
wherein the recognition unit (5) and the diagnosis unit (12) are connected to the plurality of image reading units (2) and the plurality of output units (13) via a network, and
wherein each of the output units (13) is configured to display a diagnosis result of the corresponding printing device (14).

10. The information recognition processing device according to any of claims 1 to 9, wherein the recognition unit (5) is configured to recognize a plurality of barcodes (9) recorded by the printing device (14) and to output recognition results of the plurality of barcodes (9).

11. The information recognition processing device according to claim 10,
wherein the recognition unit (5) is configured to detect arrangement of a plurality of bars from an image and detects arrangement of decoded bars through a decoding process including an error correction process from the arrangement of the plurality of the bars detected, and
wherein the diagnosis unit (12) is configured to compare the arrangement of the bars with the arrangement of the decoded bars and to diagnose the printing device (14) based on difference information obtained from a comparison result.

12. The information recognition processing device according to claim 10 or 11, wherein the diagnosis unit (12) is configured to detect, through the error correction process, the number of first corrected bars corrected through a first correction process of adding a bar to one end of the bar and the number of second corrected bars corrected through a second correction process of adding a bar to the other end of the bar and diagnoses the printing device (14) based on the recognition statistics information including the number of first corrected bars and the number of second corrected bars.

13. The information recognition processing device according to any of claims 10 to 12,
wherein the recognition unit (5) is configured to detect a plurality of bars from an image and detects slant angles of the detected bars, and
wherein the diagnosis unit (12) is configured to diagnose the printing device (14) based on the recognition statistics information including the slant angles.

14. The information recognition processing device according to any of claims 1 to 13, further comprising a recognition result storage unit (10) and a diagnosis unit (12), wherein
the recognition unit (5) is configured to recognize a barcode (9) printed by the printing device (14);
the recognition result storage unit (10) is configured to accumulate a recognition result of the barcode (9) by the recognition unit (5) as recognition statistics information;
the diagnosis unit (12) is configured to diagnose the printing device (14) based on the recognition statistics information accumulated in the recognition result storage unit (10); and
the output unit (13) is configured to output the diagnosis result obtained through the diagnosis of the diagnosis unit (12).

15. A diagnosis method comprising:
recognizing a plurality of pieces of identification information recorded by a printing device (14);
diagnosing the printing device (14) based on recognition statistics information indicating a recognition result of the plurality of pieces of identification information; and
outputting a diagnosis result.
